# EUROPEAN PATENT APPLICATION

(11) **EP 4 447 362 A1**
(43) Date of publication of application: **16.10.2024**
(21) Application number: 21966777.1
(22) Date of filing: 09.12.2021
(51) Int. Cl.: H04L 5/00

(54) **METHOD AND APPARATUS FOR MONITORING AVAILABILITY INDICATION INFORMATION, DEVICE, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2021/136883
(87) International publication number: WO 2023/102855

(57) **Abstract**

Embodiments of the present disclosure provide a method for monitoring tracking reference signal (TRS) availability indication information. The method is executed by a terminal. The method comprises: determining that the terminal is configured to monitor paging early indication downlink control information (PEI DCI); and monitoring TRS availability indication information in a predetermined mode, the predetermined mode comprising at least one of: a first mode of monitoring the TRS availability indicator information in the PEI DCI, and a second mode of monitoring the TRS availability indication information in paging DCI.

## Description

### TECHNICAL FIELD

The present disclosure relates to, but is not limited to, the field of wireless communication technology, and particularly to a method and an apparatus for monitoring TRS availability indication information, a communication device and a storage medium.

### BACKGROUND

A Tracking Reference Signal (TRS) can be used to assist the terminal in time-frequency domain tracking and/or synchronization when the terminal is in the Radio Resource Control (RRC) non-connected state. Compared to synchronization using a synchronous broadcast block (SSB, SS/PBCH Block), the moment of transmitting the TRS can be configured to be closer to the moment of Paging Occasion (PO), so that the terminal can be woken up later, which will be more power efficient.

In related techniques, the TRS is used by the terminal in the non-connected state for time-frequency domain tracking and/or synchronization, and the transmission of information related to the TRS is a matter of consideration.

### SUMMARY

Embodiments of the present disclosure provides a method and an apparatus for monitoring TRS availability indication information, a communication device, and a storage medium.

According to a first aspect of embodiments of the present disclosure, a method for monitoring TRS availability indication information is provided. The method is performed by a terminal, and includes:
determining that the terminal is configured to monitor Paging Early Indication Downlink Control Information (PEI DCI); and
monitoring Tracking Reference Signal (TRS) availability indication information in a predetermined manner, wherein the predetermined manner includes at least one of:
a first manner of monitoring the TRS availability indication information in the PEI DCI;
a second manner of monitoring the TRS availability indication information in paging DCI.

In an embodiment, the terminal monitors the TRS availability indication information in the first manner or the second manner, and the method further includes:
determining that the terminal is configured to monitor the TRS availability indication information;
monitoring the TRS availability indication information in the first manner.

In an embodiment, the method further includes:
determining that the terminal monitors the TRS availability indication information in the first manner; and
determining a valid duration of the TRS availability indication information.

In an embodiment, the valid duration includes:
a duration configured by a base station;
   or,
a duration determined according to a predetermined protocol.

In an embodiment, the valid duration is an integer multiple of a default paging cycle.

In an embodiment, the terminal monitors the TRS availability indication information in a first manner and a second manner; wherein
valid duration information configured based on the first manner and valid duration information configured based on the second manner are configured as separate duration information;
   or,
valid duration information configured based on the first manner and valid duration information configured based on the second manner are collectively configured as same duration information;
   or,
valid duration information of the TRS availability indication information monitored in the first manner is determined based on valid duration information configured based on the second manner;
   or,
valid duration information of the TRS availability indication information monitored in the second manner is determined based on valid duration information configured based on the first manner;
wherein the valid duration information indicates a valid duration of the TRS availability indication information.

In an embodiment, the method further includes:
determining that an information field of a predetermined TRS resource set group indicated by first TRS availability indication information received is a first predetermined value; and
determining that the predetermined TRS resource set group is valid.

In an embodiment, the method further includes:
determining that the information field indicated by second TRS availability indication information received within a valid duration indicated by first TRS availability indication information is the first predetermined value; wherein the information field is an information field corresponding to the predetermined TRS resource set group; and
extending the valid duration.

In an embodiment, the method further includes:
determining that an information field indicated by second TRS availability indication information received within a valid duration indicated by first TRS availability indication information is a second predetermined value; wherein the information field is an information field corresponding to the predetermined TRS resource set group; and
ignoring indication of the information field.

In an embodiment, the method further includes:
determining that an information field indicated by second TRS availability indication information received after a valid duration indicated by first TRS availability indication information is a second predetermined value; wherein the information field is an information field corresponding to the predetermined TRS resource set group;
determining that the predetermined TRS resource set group indicated by the information field is invalid.

According to a second aspect of embodiments of the present disclosure, a method for monitoring TRS availability indication information is provided. The method is performed by a base station, and includes:
determining that a terminal is configured to monitor PEI DCI; and
transmitting TRS availability indication information in a predetermined manner, wherein the predetermined manner includes at least one of:
a first manner of transmitting the TRS availability indication information in the PEI DCI;
a second manner of transmitting the TRS availability indication information in paging DCI.

According to a third aspect of embodiments of the present disclosure, an apparatus for monitoring TRS availability indication information is provided. The apparatus includes:
a determining module, configured to determine that a terminal is configured to monitor PEI DCI;
a monitoring module, configured to monitor TRS availability indication information in a predetermined manner, wherein the predetermined manner includes at least one of:
a first manner of monitoring the TRS availability indication information in the PEI DCI;
a second manner of monitoring the TRS availability indication information in paging DCI.

According to a fourth aspect of embodiments of the present disclosure, an apparatus for monitoring TRS availability indication information is provided. The apparatus includes:
a determining module, configured to determine that a terminal is configured to monitor PEI DCI;
a transmission module, configured to transmit TRS availability indication information in a predetermined manner, wherein the predetermined manner includes at least one of:
a first manner of transmitting the TRS availability indication information in the PEI DCI;
a second manner of transmitting the TRS availability indication information in paging DCI.

According to a fifth aspect of embodiments of the present disclosure, a communication device is provided. The communication device includes:
a processor; and
a memory for storing instructions executable by the processor;
wherein the processor is configured for implementing the method described in any embodiment of the present disclosure when running the executable instructions.

According to a sixth aspect of embodiments of the present disclosure, a computer storage medium is provided. The computer storage medium stores a computer-executable program which, when executed by a processor, enable the method of any embodiment of the present disclosure to be implemented.

In embodiments of the present disclosure, it is determined that a terminal is configured to monitor Paging Early Indication (PEI) Downlink Control Information (DCI); and Tracking Reference Signal (TRS) availability indication information is monitored in a predetermined manner, wherein the predetermined manner includes at least one of the following: a first manner of monitoring the TRS availability indication information in the PEI DCI; a second manner of monitoring the TRS availability indication information in paging DCI. Herein, the terminal can monitor the TRS availability indication information in the first manner and/or the second manner, so that after monitoring the TRS availability indication information, the terminal can determine whether or not the network is transmitting the TRS, and compared to the case where it is not possible to be informed whether or not the network is transmitting the TRS, the terminal can receive the TRS in time based on the TRS availability indication information, and utilize the TRS to perform time-frequency domain tracking and synchronization operations in the RRC non-connected state, etc., enhancing the reliability of the wireless communication. Moreover, the TRS availability indication information can be monitored in different manners, making monitoring more flexible.

### BRIEF DESCRIPTION OF THE DRAWINGS

FIG.1 is a diagram illustrating an architecture of a wireless communication system according to an embodiment of the present disclosure.
FIG.2 is a flowchart illustrating a method for monitoring TRS availability indication information according to an embodiment of the present disclosure.
FIG.3 is a flowchart illustrating a method for monitoring TRS availability indication information according to an embodiment of the present disclosure.
FIG.4 is a flowchart illustrating a method for monitoring TRS availability indication information according to an embodiment of the present disclosure.
FIG.5 is a flowchart illustrating a method for monitoring TRS availability indication information according to an embodiment of the present disclosure.
FIG.6 is a flowchart illustrating a method for monitoring TRS availability indication information according to an embodiment of the present disclosure.
FIG.7 is a flowchart illustrating a method for monitoring TRS availability indication information according to an embodiment of the present disclosure.
FIG.8 is a flowchart illustrating a method for monitoring TRS availability indication information according to an embodiment of the present disclosure.
FIG.9 is a flowchart illustrating a method for monitoring TRS availability indication information according to an embodiment of the present disclosure.
FIG. 10 is a flowchart illustrating a method for monitoring TRS availability indication information according to an embodiment of the present disclosure.
FIG. 11 is a schematic diagram illustrating an apparatus for monitoring TRS availability indication information according to an embodiment of the present disclosure.
FIG. 12 is a schematic diagram illustrating an apparatus for monitoring TRS availability indication information according to an embodiment of the present disclosure.
FIG. 13 is a block diagram illustrating a terminal according to an embodiment of the present disclosure.
FIG. 14 is a block diagram illustrating a base station according to an embodiment of the present disclosure.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of devices and methods consistent with aspects of the embodiments of the disclosure as recited in the appended claims.

Terms used in the embodiments of the present disclosure are for the purpose of describing specific embodiments only, and are not intended to limit the embodiments of the present disclosure. As used in the examples of this disclosure and the appended claims, the singular forms "a", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the word "if" as used herein may be interpreted as "at" or "when" or "in response to a determination."

For the purposes of brevity and ease of understanding, the terms "greater than" or "less than" are used herein to characterize size relationships. For those skilled in the field, it is understood that the term "greater than" also covers the meaning of "greater than or equal to", and the term "less than" also covers the meaning of "less than or equal to".

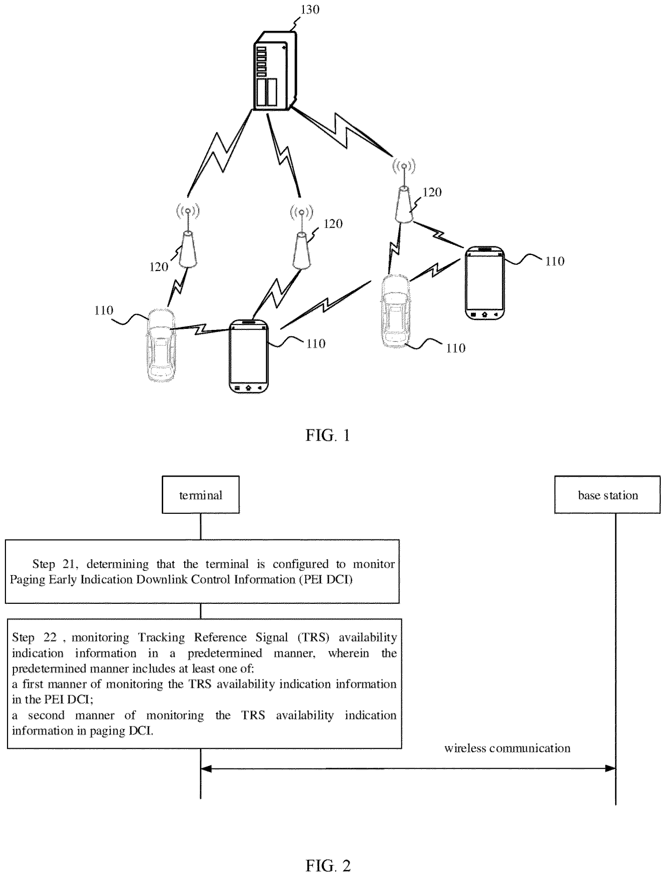

Referring to FIG. 1, which is a diagram illustrating an architecture of a wireless communication system according to an embodiment of the present disclosure As shown in FIG. 1, the wireless communication system is a communication system based on mobile communication technology, and may include a plurality of user devices 110 and a plurality of base stations 120.

The user devices 110 may be devices that provide voice and/or data connectivity to the user. The user devices 110 may communicate with one or more core networks via a Radio Access Network (RAN), and the user devices 110 may be Internet of Things (IoT) user devices, such as sensor devices, mobile telephones, and computers with IoT user devices, and for example, may be stationary, portable, pocket-size, hand-held, computer-built, or vehicle-mounted device, for example, a Station (STA), subscriber unit, subscriber station, mobile station, mobile, remote station, access point, remote terminal, access terminal, user terminal, user agent, user device, or user equipment. Alternatively, the user device 110 may also be an UAV device. Alternatively, the user device 110 may be an in-vehicle device, which for example, may be a traveling computer with wireless communication capabilities, or a wireless user device that is connected to an external traveling computer. Alternatively, the user device 110 may be a roadside device, e.g., may be a street light, a signal light, or other roadside device, etc., with wireless communication capabilities.

The base station 120 may be a network side device in a wireless communication system. The wireless communication system may be the 4th generation mobile communication (4G) system, also known as a Long Term Evolution (LTE) system; or, the wireless communication system may also be a 5G system, also known as a New Radio system or 5G NR system. Alternatively, the wireless communication system may be a further next-generation system of the 5G system. The access network in the 5G system can be referred to as NG-RAN (New Generation-Radio Access Network).

The base station 120 may be an evolved base station (eNB) employed in the 4G system. Alternatively, the base station 120 may be a base station (gNB) using a centralized-distributed architecture in a 5G system. The base station 120, when adopting a centralized-distributed architecture, typically includes a central unit (CU) and at least two distributed units (DUs). The central unit is provided with protocol stacks for Packet Data Convergence Protocol (PDCP) layer, Radio Link Control (RLC) layer, and Media Access Control (MAC) layer; the distributed unit is provided with protocol stacks for Physical (Physical) layer. The specific implementation of the base station 120 is not limited in embodiments of the present disclosure.

A wireless connection can be established between the base station 120 and the user device 110 through a wireless air port. In various embodiments, the wireless air port is a wireless air port based on the 4th generation mobile communication (4G) standard; or, the wireless air port is a wireless air port based on 5th generation mobile communication (5G) standard, for example, the wireless air port is a new air port; or, the wireless air port may be a wireless air port based on a further next-generation mobile communication standard based on 5G.

In some embodiments, an E2E (End to End) connection can be established between the user devices 110. Examples include V2V (vehicle to vehicle) communication, V2I (vehicle to infrastructure) communication, and V2P (vehicle to pedestrian) communication and other scenarios in vehicle to everything (V2X).

Herein, the user device described above may be considered a terminal device in the following embodiments.

In some embodiments, the wireless communication system described above may also include a network management device 130.

Several base stations 120 are each connected to the network management device 130. The network management device 130 may be a core network device in the wireless communication system. For example, the network management device 130 may be a Mobility Management Entity (MME) in an Evolved Packet Core (EPC) network. Alternatively, the network management device may be other core network devices, such as a Serving GateWay (SGW), a Public Data Network GateWay (PGW), a Policy and Charging Rules Function unit (PCRF), or a Home Subscriber Server (HSS). The implementation form of the network management device 130 is not limited in embodiments of the present disclosure.

To facilitate understanding of those skilled in the field, embodiments of the present disclosure enumerate a plurality of implementations to clearly illustrate the technical solutions of embodiments of the present disclosure. Certainly, those skilled in the field can understand that the plurality of implementations provided in embodiments of the present disclosure can be performed alone, or combined with the methods of other embodiments in embodiments of the present disclosure, or performed alone or combined with some methods in other related technologies, which is not limited in embodiments of the present disclosure.

In order to better understand the technical solutions described in any embodiments of the present disclosure, the application scenario of wireless communication in the related technology is first described below.

In an embodiment, when the terminal is in the Radio Resource Control (RRC) non-connected state, the main behavior of the terminal is to periodically monitor paging messages, and to enter the RRC connected state to communicate with the network normally after receiving the paging messages. Here, the paging message is carried in the Physical Downlink Shared channel (PDSCH), and needs to be scheduled by the paging Down Control Information (DCI) which is scrambled by the temporary flag of the wireless network. For a terminal, the corresponding paging occasion (PO) occurs periodically, and the radio frame in which the PO is located is called a Paging Frame (PF).

In an embodiment, the terminal needs to wake up for synchronization in each paging cycle and blindly check whether there is any paging DCI belonging to the terminal in the corresponding PO. In order to save energy consumption of the terminal in the idle state, the base station can send a Paging Early Indication (PEI) for the terminal. When the terminal receives the PEI corresponding to this terminal, and the PEI instructs the UE to wake up, the terminal needs to wake up before the next PO to monitor the paging message. In the case that the PEI instructs the terminal not to wake up, or the terminal does not receive the corresponding PEI, the terminal does not need to wake up in the next paging cycle, i.e., the terminal does not need to monitor the next PO. The PEI is carried in the form of a DCI. Here, the DCI may be DCI format 2-7.

In an embodiment, the PEI DCI may be provided with a TRS availability indication field for indicating whether or not there is TRS pilot information. Here, the TRS can be used by the terminal in the RRC idle state and the RRC inactive state to perform time-frequency domain tracking and synchronization. In an embodiment, the TRS availability indication field may be transmitted in the paging DCI in addition to the PEI. The TRS availability indication field is a bitmap containing N bits, each bit being corresponding to one TRS resource set group. When the TRS availability indication field indicates that a certain TRS resource set group is available, the start time for the indication to take effect is the start time of the first frame of the current default paging cycle where the terminal is located when receiving the TRS availability indication.

Referring to FIG. 2, which is a flowchart illustrating a method for monitoring TRS availability indication information according to an embodiment of the present disclosure, the method is performed by a terminal, and includes:
Step 21, determining that the terminal is configured to monitor Paging Early Indication Downlink Control Information (PEI DCI); and
Step 22, monitoring Tracking Reference Signal (TRS) availability indication information in a predetermined manner, wherein the predetermined manner includes at least one of:
   a first manner of monitoring the TRS availability indication information in the PEI DCI;
   a second manner of monitoring the TRS availability indication information in paging DCI.

Here, the terminal involved in the present disclosure may be, but is not limited to, a cell phone, a wearable device, a vehicle terminal, a road side unit (RSU), a smart home terminal, an industrial sensing device and/or a medical device. Here, the terminal may be a terminal in an RRC non-connected state. The RRC non-connected state includes an RRC idle state and an RRC inactive state.

The base station involved in the present disclosure may be an access device for the terminal to access the network. Here, the base station may be a base station of various types, such as a base station of the 3rd generation mobile communication (3G), a base station of the 4th generation mobile communication (4G), a base station of the 5th generation mobile communication (5G), or other evolved base stations.

In an embodiment, it is determined that the terminal is configured to monitor PEI DCI; TRS availability indication information is monitored in the PEI DCI; a TRS is received based on the monitored TRS availability indication information; and time-frequency domain synchronization and tracking is performed based on the TRS. It is noted that the TRS availability indication information may include time-frequency domain resource information associated with the transmitted TRS.

In an embodiment, it is determined that the terminal is configured to monitor the PEI DCI; the TRS availability indication information is monitored in the paging DCI; the TRS is received based on the monitored TRS availability indication information; and time-frequency domain synchronization and tracking is performed based on the TRS.

In an embodiment, it is determined that the terminal is configured to monitor PEI DCI; TRS availability indication information is monitored in the PEI DCI and in the paging DCI; TRS is received based on the monitored TRS availability indication information; and time-frequency domain synchronization and tracking is performed based on the TRS.

In an embodiment, when the terminal is configured to monitor the TRS availability indication information in the first manner, the TRS availability indication information is monitored in the first manner. It is noted that when the terminal is configured to monitor the TRS availability indication information in the first manner, the network transmits the TRS availability indication information in the PEI DCI.

In an embodiment, when the terminal is configured to monitor the TRS availability indication information in the second manner, the TRS availability indication information is monitored in the second manner. It is noted that when the terminal is configured to monitor the TRS availability indication information in the second manner, the network transmits the TRS availability indication information in the paging DCI.

In an embodiment, when the terminal is configured to monitor the TRS availability indication information in the first manner and the second manner, the TRS availability indication information is monitored in the first manner and the second manner. Here, monitoring in the first manner and the second manner may be both monitoring in the PEI DCI and monitoring in the paging DCI. It is noted that when the terminal is configured to monitor the TRS availability indication information in the first manner and the second manner, the network transmits the TRS availability indication information in both the PEI DCI and the paging DCI.

In some embodiments, the manner of monitoring the TRS availability indication information may be determined based on received configuration information, or the manner of monitoring the TRS availability indication information may be determined based on a predetermined protocol, or the manner of monitoring the TRS availability indication information may be determined based on a parameter of configuration of the user, which is not limited herein.

In an embodiment, in case the terminal is configured to monitor the TRS availability indication information in the first manner, the TRS availability indication field can be set in the PEI DCI.

In an embodiment, if the terminal is configured to monitor the TRS availability indication information in the second manner, the TRS availability indication field can be set in the paging DCI.

In an embodiment, if the terminal is configured to monitor the TRS availability indication information in the first manner and the second manner, the TRS availability indication field may be set in both the PEI DCI and the paging DCI.

It is noted that the TRS availability indication field may be transmitted in the paging DCI in addition to the PEI DCI. Here, the TRS availability indication field is a bitmap containing N bits, and each bit corresponds to one TRS resource set group. In case the TRS availability indication field indicates that a certain TRS resource set group is available, the start time for this indication to take effect is the start time of the first frame of the current default paging cycle where the terminal is located when receiving this TRS availability indication. For example, when a bit in the bitmap takes the value of "1", it indicates that the corresponding TRS resource set group is available; or, when a bit takes the value of "0", it indicates that the corresponding TRS resource set group is not available.

In embodiments of the present disclosure, it is determined that the terminal is configured to monitor the paging early indication PEI; the TRS availability indication information is monitored in the predetermined manner, wherein the predetermined manner includes at least one of the following: the first manner of monitoring the TRS availability indication information in the PEI; and the second manner of monitoring the TRS availability indication information in the paging DCI. Herein, the terminal may monitor the TRS availability indication information in the first manner and/or the second manner, so that after monitoring the TRS availability indication information, the terminal can determine whether or not the network is transmitting the TRS, and compared to the case where it is not possible to be informed whether or not the network is transmitting the TRS, the terminal can receive the TRS in time based on the TRS availability indication information, and utilize the TRS to perform time-frequency domain tracking and synchronization operations in the RRC non-connected state, etc., enhancing the reliability of the wireless communication. Moreover, the TRS availability indication information can be monitored in different manners, making monitoring more flexible.

It is to be noted that a person skilled in the field can understand that the methods provided in the embodiments of the present disclosure can be executed alone or together with some of the methods in the embodiments of the present disclosure or some of the methods in the related technology.

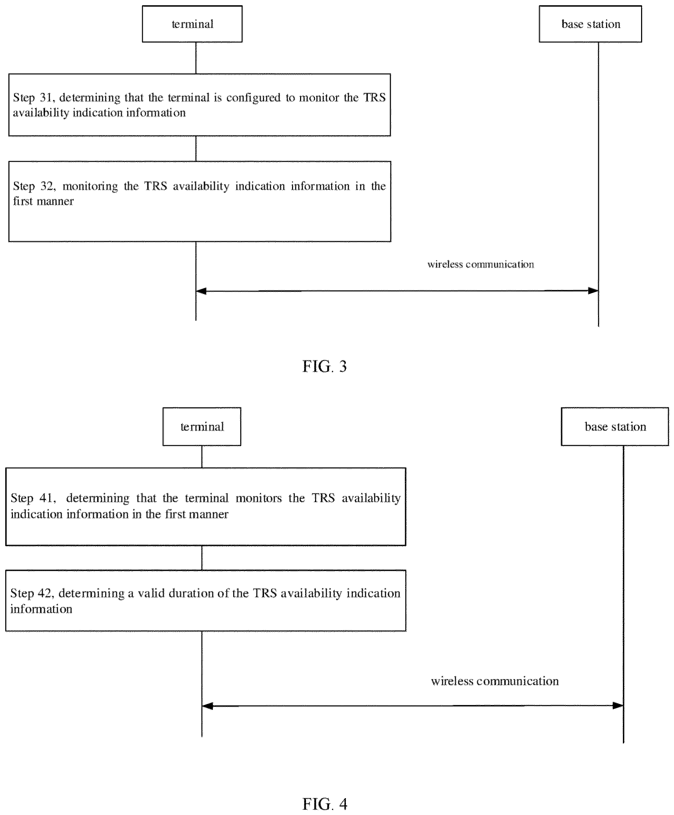

Referring to FIG. 3, which is a method for monitoring TRS availability indication information according to an embodiment of the present disclosure, the terminal can monitor the TRS availability indication information in a first manner or a second manner, and the method includes:
Step 31, determining that the terminal is configured to monitor the TRS availability indication information;
Step 32, monitoring the TRS availability indication information in the first manner.

Herein, the first manner may be monitoring the TRS availability indication information in PEI DCI.

In an embodiment, it is determined that the terminal is configured to monitor the PEI DCI; it is determined that the terminal is configured to monitor the TRS availability indication information; and the TRS availability indication information is monitored in the PEI DCI.

In an embodiment, it is determined that the terminal is configured to monitor the PEI DCI; it is determined that the terminal is configured to monitor the TRS availability indication information; and the TRS availability indication information is monitored in the PEI DCI and the TRS availability indication information is not monitored in the paging DCI.

Herein, by monitoring the TRS availability indication information in the PEI DCI, the terminal only needs to monitor the DCI once, i.e., it only needs to monitor the PEI DCI, as compared to monitoring the TRS availability indication information in the paging DCI. The terminal does not need to monitor the PEI DCI first and then monitor the paging DCI after being woken up by the indication. In this way, power can be saved and the endurance of the terminal can be improved.

Herein, the manner of monitoring the TRS availability indication information can be determined based on the priority of monitoring the TRS availability indication information in the first manner and the priority of monitoring the TRS availability indication information in the second manner. Herein, the second manner may be to monitor the TRS availability indication information in the paging DCI.

In an embodiment, it may be that the terminal is configured to monitor the TRS availability indication information in the first manner or in the second manner, and a priority of monitoring the TRS availability indication information in the first manner is greater than a priority of monitoring the TRS availability indication information in the second manner. After determining that the terminal is configured to monitor the TRS availability indication information, priority may be given to monitoring the TRS availability indication information in the first manner.

In an embodiment, it may be that the terminal is configured to monitor the TRS availability indication information in the first manner or in the second manner, and the priority of monitoring the TRS availability indication information in the first manner is less than the priority of monitoring the TRS availability indication information in the second manner. After determining that the terminal is configured to monitor the TRS availability indication information, priority may be given to monitoring the TRS availability indication information in the second manner.

It is to be noted that a person skilled in the field can understand that the methods provided in the embodiments of the present disclosure can be performed alone or together with some of the methods in the embodiments of the present disclosure or some of the methods in the related technology.

Referring to FIG. 4, which is a method for monitoring TRS availability indication information according to an embodiment of the present disclosure, the method is performed by a terminal, and the terminal can monitor the TRS availability indication information through a first manner or a second manner; the method includes:
Step 41, determining that the terminal monitors the TRS availability indication information in the first manner;
Step 42, determining a valid duration of the TRS availability indication information.

Herein, the first manner may be monitoring the TRS availability indication information in PEI DCI.

In an embodiment, the valid duration includes:
a duration configured by a base station;
   or,
a duration determined according to a predetermined protocol.

Herein, in case the base station does not configured the duration, the valid duration is the duration determined according to the predetermined protocol.

In an embodiment, the valid duration is an integer multiple of a default paging cycle.

In an embodiment, the duration configured by the base station may be configured in units of the default paging cycle. For example, the duration configured by the base station may be a duration of 8 or 16 default paging cycles.

In an embodiment, the duration determined according to the predetermined protocol may be a duration of 3 default paging cycles.

Herein, the starting time for the TRS availability indication information to take effect may be the starting moment of the first frame of the current default paging cycle in which the terminal receives the TRS availability indication information.

It is to be noted that a person skilled in the field may understand that the methods provided in the embodiments of the present disclosure may be performed alone or in conjunction with some of the methods in the embodiments of the present disclosure or some of the methods in the related technology.

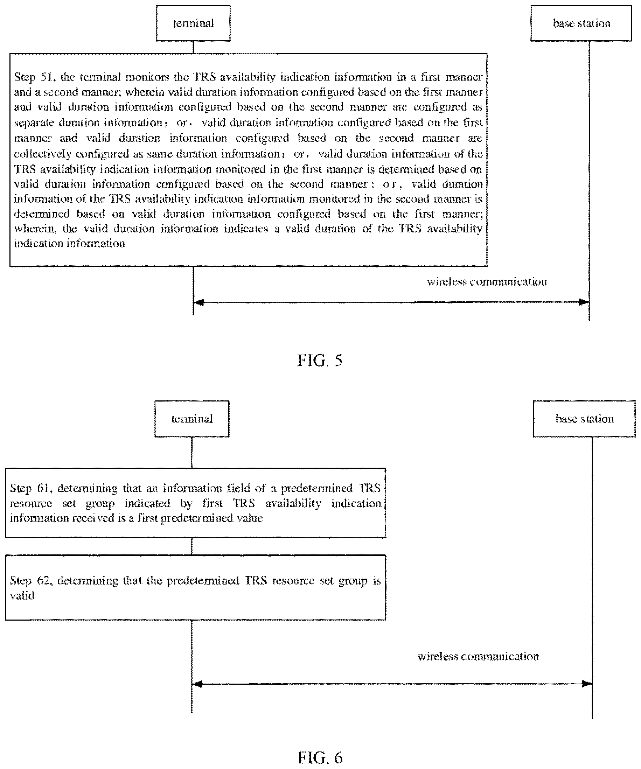

Referring to FIG. 5, which is method for monitoring TRS availability indication information according to an embodiment of the present disclosure, the method is performed by a terminal, and includes followings.

Step 51, the terminal monitors the TRS availability indication information in a first manner and a second manner.

Here, valid duration information configured based on the first manner and valid duration information configured based on the second manner are configured as separate duration information; or, valid duration information configured based on the first manner and valid duration information configured based on the second manner are collectively configured as same duration information; or, valid duration information of the TRS availability indication information monitored in the first manner is determined based on valid duration information configured based on the second manner; or, valid duration information of the TRS availability indication information monitored in the second manner is determined based on valid duration information configured based on the first manner; wherein the valid duration information indicates a valid duration of the TRS availability indication information.

Herein, the valid duration information can be network-configured or determined based on a predetermined protocol, which is not limited here. It is noted that the valid duration information may be configured by the network via high-level signaling.

Herein, the first manner may be to monitor the TRS availability indication information in the PEI DCI. The second manner may be to monitor the TRS availability indication information in the paging DCI.

In an embodiment, it is determined that the terminal is configured to monitor the PEI DCI; the TRS availability indication information is monitored in the PEI DCI and the paging DCI; the TRS is received based on the monitored TRS availability indication information; time-frequency domain synchronization and tracking and the like is performed based on the TRS.

In an embodiment, in case the terminal is configured to monitor the TRS availability indication information in the first manner and the second manner, the TRS availability indication information is monitored in the first manner and the second manner. Herein, monitoring in the first manner and the second manner may be monitoring in both the PEI DCI and the paging DCI. It is noted that when the terminal is configured to monitor the TRS availability indication information in the first manner and the second manner, the network transmits the TRS availability indication information in both the PEI DCI and the paging DCI.

In an embodiment, the valid duration information configured based on the first manner is the configured first duration information; the valid duration information configured based on said second manner is the configured second duration information. In case the first duration information is received at a first moment and the second duration information is received at a second moment within the duration indicated by the first duration information, the valid duration of the TRS availability indication information is extended based on the duration indicated by the second duration information. Alternatively, in case the second duration information is received at the first moment and the first duration information is received at the second moment within the duration indicated by the second duration information, the valid duration of the TRS availability indication information is extended based on the duration indicated by the first duration information.

In an embodiment, only one duration information is configured, and the duration indicated by the duration information applies to both the TRS availability indication information transmitted in the PEI DCI and the TRS availability indication information transmitted in the paging DCI. For example, the valid duration of the TRS availability indication information monitored in the PEI DCI may be determined based on this duration information, and the valid duration of the TRS availability indication information monitored in the paging DCI may be determined based on that duration information.

In an embodiment, only the duration information of the TRS availability indication information transmitted in the paging DCI is configured, and the valid duration of the TRS availability indication information transmitted in the PEI DCI is determined based on the valid duration indicated by the duration information. For example, if the PEI DCI and the PO corresponding thereto are in different DRX cycles, the valid duration of the TRS availability indication information monitored in the PEI DCI may be the valid duration indicated by the duration information plus the duration of one default paging cycle, otherwise, the valid duration of the TRS availability indication information monitored in the PEI DCI is the valid duration indicated by the duration information.

In an embodiment, only the duration information of the TRS availability indication information transmitted in the PEI DCI is configured, and the valid duration of the TRS availability indication information transmitted in the paging DCI is determined based on the valid duration indicated by the duration information.

It is to be noted that a person skilled in the field can understand that the methods provided in the embodiments of the present disclosure can be performed alone or together with some of the methods in the embodiments of the present disclosure or some of the methods in the related art.

Referring to FIG. 6, which is a method for monitoring TRS availability indication information according to an embodiment of the present disclosure, the method is performed by a terminal, and includes:
Step 61, determining that an information field of a predetermined TRS resource set group indicated by first TRS availability indication information received is a first predetermined value;
Step 62, determining that the predetermined TRS resource set group is valid.

It is noted that in this embodiment, the TRS availability indication information may be monitored in the PEI DCI, or the TRS availability indication information may be monitored in the paging DCI, or the TRS availability indication information may be monitored in both the PEI DCI and the paging DCI, which is not limited herein.

In an embodiment, the TRS availability indication field can be set in the PEI DCI and/or the paging DCI. Here, the TRS availability indication field is a bitmap containing N bits, each bit corresponds to one TRS resource set group, and multiple bits correspond to multiple TRS resource set groups. In case the TRS availability indication field indicates that a certain TRS resource set group is available, the starting time when the corresponding TRS availability indication information becomes effective is the starting time of the first frame of the current default paging cycle when the terminal receives the TRS availability indication information.

In an embodiment, when a bit in the TRS availability indication field takes a first value (e.g., "1"), the corresponding TRS resource set group is available; or, when a bit takes a second value (e.g., "0"), the corresponding TRS resource set group is not available. Herein, available means that the TRS resource set group can take effect. In case the TRS availability indication information received by the terminal indicates that the bit corresponding to a TRS resource set group is equal to "1", the TRS resource set group is in effect. It should be noted that the TRS availability indication information taking effect may include the TRS resource set group taking effect. Herein, the effective duration of the TRS resource set group being effective includes: the duration configured by the base station; or, the duration determined according to the predetermined protocol. Herein, if the base station does not configure the duration, the valid duration is the duration determined according to the predetermined protocol.

It is to be noted that if the TRS availability indication information received by the terminal indicates that the bit corresponding to a certain TRS resource set group is not equal to "1", the TRS resource set group is not effective.

It should be noted that a person skilled in the field may understand that the methods provided in the embodiments of the present disclosure may be performed alone or together with some of the methods in the embodiments of the present disclosure or some of the methods in the related technology.

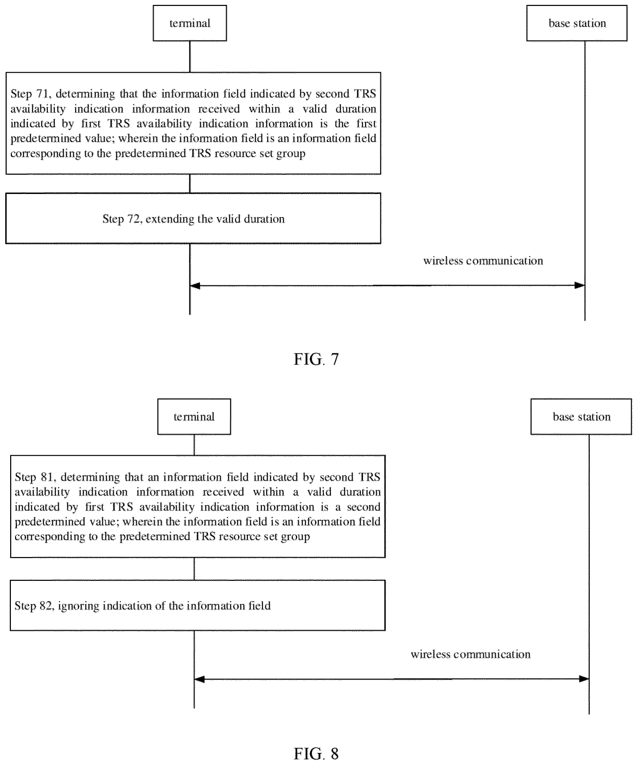

Referring to FIG. 7, which is a method for monitoring TRS availability indication information according to an embodiment of the present disclosure, the method is performed by a terminal, and includes:
Step 71, determining that the information field indicated by second TRS availability indication information received within a valid duration indicated by first TRS availability indication information is the first predetermined value; wherein the information field is an information field corresponding to the predetermined TRS resource set group;
Step 72, extending the valid duration.

It is noted that in this embodiment, the TRS availability indication information may be monitored in the PEI DCI, or the TRS availability indication information may be monitored in the paging DCI, or the TRS availability indication information may be monitored in the PEI DCI and the paging DCI.

In an embodiment, the first TRS availability indication information is received at a first moment and the information field corresponding to the first TRS availability indication information indicates the first predetermined value, and the second TRS availability indication information is received at a second moment. In case the second moment is within the valid duration indicated by the first TRS availability indication information, and this information field corresponding to the second TRS availability indication information indicates the first predetermined value, the valid duration of the predetermined TRS resource set group is extended. In an embodiment, the valid duration is extended to a moment corresponding to a sum of the second moment and the valid duration indicated by the second TRS availability indication information.

In an embodiment, the first TRS availability indication information is determined to be in effect when that information field corresponding to the first TRS availability indication information indicates the first predetermined value. As an example, when this information field corresponding to the first TRS availability indication information indicates "1", it is determined that the first TRS availability indication information is in effect. Herein, the first TRS availability indication information taking effect may be the TRS resource set group indicated by the corresponding information field taking effect.

In an embodiment, in case the second moment is within the valid duration indicated by the first TRS availability indication information, and when the information field corresponding to the second TRS availability indication information indicates the first predetermined value, it is determined that the second TRS availability indication information is valid. For example, in case the second moment is within the valid duration indicated by the first TRS availability indication information, and when this information field corresponding to the second TRS availability indication information indicates "1", it is determined that the second TRS availability indication information is valid.

It is to be noted that a person skilled in the field can understand that the methods provided in the embodiments of the present disclosure can be performed alone or together with some of the methods in the embodiments of the present disclosure or some of the methods in the related technology.

Referring to FIG. 8, which is a method for monitoring TRS availability indication information according to an embodiment of the present disclosure, the method is performed by the terminal, and the method includes:
Step 81, determining that an information field indicated by second TRS availability indication information received within a valid duration indicated by first TRS availability indication information is a second predetermined value; wherein the information field is an information field corresponding to the predetermined TRS resource set group;
Step 82, ignoring indication of the information field.

It is noted that in this embodiment, the TRS availability indication information may be monitored in the PEI DCI, or the TRS availability indication information may be monitored in the paging DCI, or the TRS availability indication information may be monitored in the PEI DCI and the paging DCI.

In an embodiment, the first TRS availability indication information is received at a first moment and the information field indicated by the first TRS availability indication information is the first predetermined value, and the second TRS availability indication information is received at a second moment. In case the second moment is within a valid duration indicated by the first TRS availability indication information, and this information field corresponding to the second TRS availability indication information indicates a second predetermined value, the indication of this information field is ignored.

In an embodiment, when that information field corresponding to the first TRS availability indication information indicates the first predetermined value, it is determined that the first TRS availability indication information is in effect. For example, when this information field corresponding to the first TRS availability indication information indicates "1", it is determined that the first TRS availability indication information is in effect. Herein, the first TRS availability indication information taking effect may be the TRS resource set group indicated by the corresponding information field taking effect.

In an embodiment, in case the second moment is within the valid duration indicated by the first TRS availability indication information, and when the information field corresponding to the second TRS availability indication information indicates the second predetermined value, it is determined that the second TRS availability indication information is not valid. For example, in the case where the second moment is outside the valid duration indicated by the first TRS availability indication information, and when the information field corresponding to the second TRS availability indication information indicates "0", it is determined that the second TRS availability indication information is invalid. Herein, the second TRS availability indication information being invalid may be that the TRS resource set group indicated by the corresponding information field being invalid. It is noted that the first predetermined value is different from the second predetermined value.

It is to be noted that a person skilled in the field can understand that the methods provided in the embodiments of the present disclosure can be performed alone or together with some of the methods in the embodiments of the present disclosure or some of the methods in the related technology.

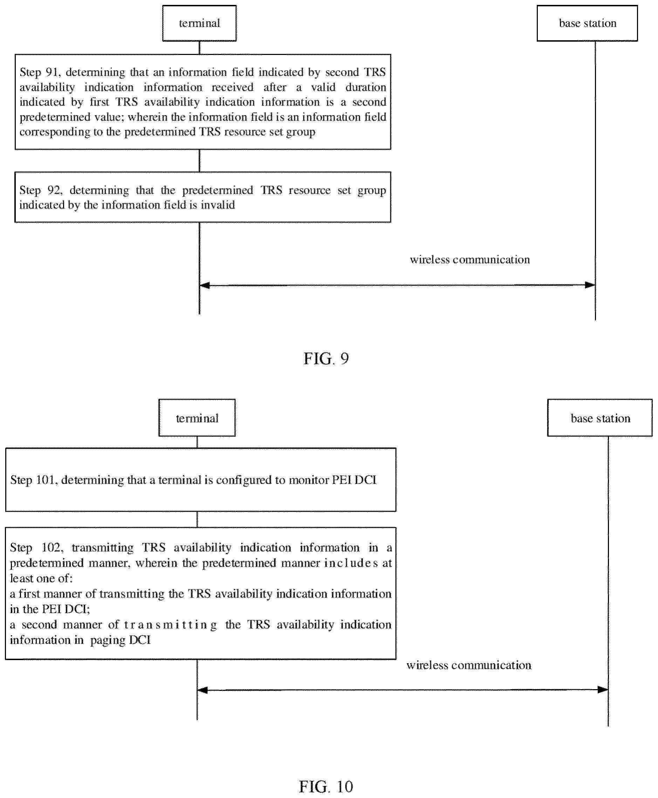

Referring to FIG. 9, which is a method for monitoring TRS availability indication information according to an embodiment of the present disclosure, the method is performed by a terminal, and the method includes:
Step 91, determining that an information field indicated by second TRS availability indication information received after a valid duration indicated by first TRS availability indication information is a second predetermined value; wherein the information field is an information field corresponding to the predetermined TRS resource set group;
Step 92, determining that the predetermined TRS resource set group indicated by the information field is invalid.

It is noted that in this embodiment, the TRS availability indication information may be monitored in the PEI DCI, or the TRS availability indication information may be monitored in the paging DCI, or the TRS availability indication information may be monitored in the PEI DCI and the paging DCI.

In an embodiment, the first TRS availability indication information is received at a first moment and the information field corresponding to the first TRS availability indication information indicates the first predetermined value, and the second TRS availability indication information is received at a second moment. In case the second moment is outside the range of valid duration indicated by the first TRS availability indication information and this information field corresponding to the second TRS availability indication information indicates a second predetermined value, it is determined that the predetermined TRS resource set group indicated by this information field is invalid.

In an embodiment, when the information field corresponding to the first TRS availability indication information indicates the first predetermined value, it is determined that the first TRS availability indication information is valid. For example, when this information field corresponding to the first TRS availability indication information indicates "1", it is determined that the first TRS availability indication information is effective. Herein, the first TRS availability indication information being valid may be the TRS resource set group indicated by the corresponding information field being valid.

In an embodiment, if the second moment is outside the range of valid duration indicated by the first TRS availability indication information, and when the information field corresponding to the second TRS availability indication information indicates the second predetermined value, it is determined that the second TRS availability indication information is not valid. For example, if the second moment is outside the range of the valid duration indicated by the first TRS availability indication information, and when the information field corresponding to the second TRS availability indication information indicates "0", it is determined that the second TRS availability indication information is invalid. Herein, the second TRS availability indication information being invalid may be that the TRS resource set group indicated by the corresponding information field is invalid. It is noted that the first predetermined value is different from the second predetermined value.

It is to be noted that a person skilled in the field can understand that the methods provided in the embodiments of the present disclosure can be performed alone or together with some of the methods in the embodiments of the present disclosure or some of the methods in the related technology.

Referring to FIG. 10, which is a method for monitoring TRS availability indication information according to an embodiment of the present disclosure, the method is performed by a terminal, and the method includes:
Step 101, determining that a terminal is configured to monitor PEI DCI;
Step 102, transmitting TRS availability indication information in a predetermined manner, wherein the predetermined manner includes at least one of:
   a first manner of transmitting the TRS availability indication information in the PEI DCI;
   a second manner of transmitting the TRS availability indication information in paging DCI.

Herein, the terminal involved in the present disclosure may be, but is not limited to, a cell phone, a wearable device, a vehicle terminal, a Road Side Unit (RSU), a smart home terminal, an industrial sensing device and/or a medical device, etc. Herein, the terminal may be a terminal in an RRC non-connected state. The RRC non-connected state includes an RRC idle state and an RRC inactive state.

The base station involved in the present disclosure may be an access device for the terminal to access the network. Herein, the base station may be various types of base stations, such as, a base station for a third generation mobile communication (3G) network, a base station for a fourth generation mobile communication (4G) network, a base station for a fifth generation mobile communication (5G) network, or other evolved base stations.

In an embodiment, the terminal determines that the terminal is configured to monitor the PEI DCI; the terminal monitors TRS availability indication information in the PEI DCI; the terminal receives the TRS sent by the base station based on the monitored TRS availability indication information; the terminal carries out time-frequency domain synchronization and tracking and the like based on the TRS. It is noted that the TRS availability indication information may include time-frequency domain resource information associated with the transmitted TRS.

In an embodiment, the terminal determines that the terminal is configured to monitor the PEI DCI; the terminal monitors the TRS availability indication information in the paging DCI; the terminal receives the TRS sent by the base station based on the monitored TRS availability indication information; and the terminal carries out the time-frequency domain synchronization and tracking and the like based on the TRS.

In an embodiment, the terminal determines that the terminal is configured to monitor the PEI DCI; the terminal monitors the TRS availability indication information in the PEI DCI and in the paging DCI; the terminal receives the TRS sent by the base station based on the monitored TRS availability indication information; the terminal performs time-frequency domain synchronization and tracking and the like based on the TRS.

In an embodiment, when the terminal is configured to monitor the TRS availability indication information in the first manner, the terminal monitors the TRS availability indication information in the first manner. It is noted that when the terminal is configured to monitor the TRS availability indication information in the first manner, the network transmits the TRS availability indication information in the PEI DCI.

In an embodiment, when the terminal is configured to monitor the TRS availability indication information in the second manner, the terminal monitors the TRS availability indication information in the second manner. It is noted that when the terminal is configured to monitor the TRS availability indication information in the second manner, the network transmits the TRS availability indication information in the paging DCI.

In an embodiment, when the terminal is configured to monitor the TRS availability indication information in the first manner and the second manner, the terminal monitors the TRS availability indication information in the first manner and the second manner. Herein, monitoring in the first manner and the second manner may be both monitoring in the PEI DCI and monitoring in the paging DCI. It is noted that when the terminal is configured to monitor the TRS availability indication information in the first manner and the second manner, the network transmits the TRS availability indication information in both the PEI DCI and the paging DCI.

In some embodiments, the terminal may determine the manner of monitoring the TRS availability indication information based on received configuration information, or the terminal may determine the manner of monitoring the TRS availability indication information based on a predetermined protocol, or the terminal may determine the manner of monitoring the TRS availability indication information based on a parameter of the configuration of the user, which is not limited herein.

In an embodiment, in case the terminal is configured to monitor the TRS availability indication information in the first manner, the base station may set a TRS availability indication field in the PEI DCI.

In an embodiment, if the terminal is configured to monitor the TRS availability indication information in the second manner, the base station may set the TRS availability indication field in the paging DCI.

In an embodiment, in case the terminal is configured to monitor the TRS availability indication information in the first manner and the second manner, the base station may set the TRS availability indication field in both the PEI DCI and the paging DCI.

It is noted that the TRS availability indication field can be transmitted in the paging DCI in addition to the PEI DCI. Herein, the TRS availability indication field is a bitmap containing N bits, and each bit corresponds to one TRS resource set group. If the TRS availability indication field indicates that a certain TRS resource set group is available, the start time of this indication taking effect is the start of the first frame of the current default paging cycle in which the terminal receives this TRS availability indication. For example, when a certain bit in the bitmap is set to "1", it indicates that the corresponding TRS resource set group is available; or when a bit is set to "0", it indicates that the corresponding TRS resource set group is not available.

It is to be noted that a person skilled in the field can understand that the methods provided in the embodiments of the present disclosure can be performed alone or together with some of the methods in the embodiments of the present disclosure or some of the methods in the related technology.

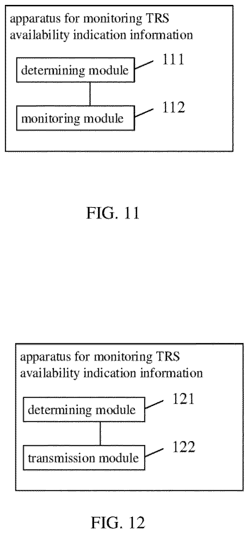

Referring to FIG. 11, this embodiment provides an apparatus for monitoring TRS availability indication information. The apparatus includes:
a determining module 111 configured to determine that a terminal is configured to monitor PEI DCI;
a monitoring module 112 configured to monitor TRS availability indication information in a predetermined manner, wherein the predetermined manner includes at least one of:
a first manner of monitoring the TRS availability indication information in the PEI DCI;
a second manner of monitoring the TRS availability indication information in paging DCI.

It is to be noted that a person skilled in the field can understand that the methods provided in the embodiments of the present disclosure can be performed alone or together with some of the methods in the embodiments of the present disclosure or some of the methods in the related technology.

Referring to FIG. 12, this embodiments provides an apparatus for monitoring TRS availability indication information. The apparatus includes:
a determining module 121 configured to determine that a terminal is configured to monitor PEI DCI;
a transmission module 122 configured to transmit TRS availability indication information in a predetermined manner, wherein the predetermined manner includes at least one of:
a first manner of transmitting the TRS availability indication information in the PEI DCI;
a second manner of transmitting the TRS availability indication information in paging DCI.

It is to be noted that a person skilled in the field can understand that the methods provided by the embodiments of the present disclosure can be performed alone or together with some of the methods in the embodiments of the present disclosure or some of the methods in the related technology.

An embodiment of the present disclosure provides a communication device, including:
a processor; and
a memory for storing instructions executable by the processor;
wherein the processor is configured for implementing the method applied to any embodiment of the present disclosure when running the executable instructions.

The processor may include various types of storage media that are non-transitory computer storage media capable of continuing to memorize information stored thereon after the communication device is powered down.

The processor may be connected to the memory through a bus or the like for reading an executable program stored on the memory.

An embodiment of the present disclosure provides a computer storage medium, storing computer-executable program which, when executed by a processor, enable the method of any embodiment of the present disclosure to be implemented.

Regarding the apparatus in the above embodiments, the specific manner in which each module performs an operation has been described in detail in the embodiments relating to the method, and will not be described in detail herein.

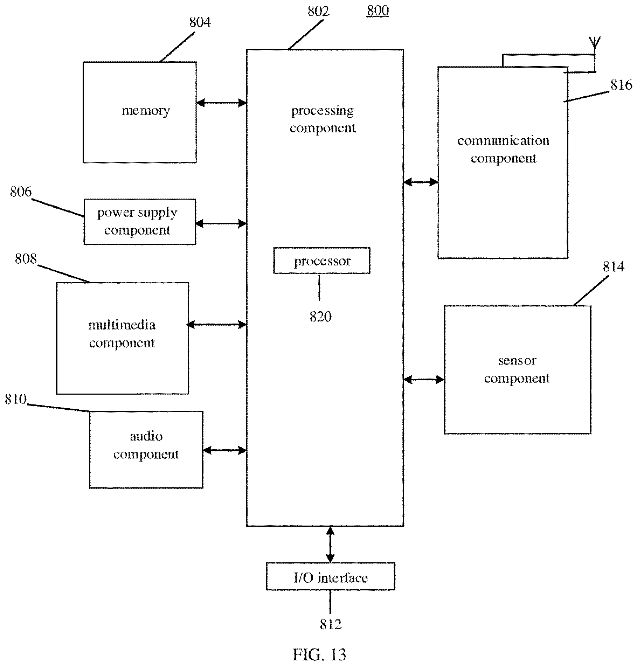

Referring to FIG. 13, an embodiment of the present disclosure provides an structure of a terminal.

Referring to FIG. 13, this embodiment provides a terminal 800, which specifically may be a cell phone, a computer, a digital broadcasting terminal, a message transceiver device, a gaming console, a tablet device, a medical device, a fitness device, a personal digital assistant, etc.

Referring to FIG. 13, the terminal 800 may include one or more of the following components: a processing component 802, a memory 804, a power supply component 806, a multimedia component 808, an audio component 810, an inputs/outputs interface (I/O) 812, a sensor component 814, and a communication component 816.

The processing component 802 generally controls the overall operation of the terminal 800, such as operations associated with displays, telephone calls, data communications, camera operations, and recording operations. The processing component 802 can include one or more processors 820 to execute instructions to accomplish all or some of the steps of the method described above. Alternatively, the processing component 802 may include one or more modules to facilitate interaction between the processing component 802 and other components. For example, the processing component 802 can include a multimedia module to facilitate interaction between the multimedia component 808 and the processing component 802.

The memory 804 is configured to store various types of data to support operation at the device 800. Examples of such data include instructions for any application or method operated on the terminal 800, contact data, phone book data, messages, pictures, videos, etc. The memory 804 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, a disk or CD-ROM.

The power supply assembly 806 provides power to the various components of the terminal 800. The power supply component 806 can include a power management system, one or more power supplies, and other components associated with generating, managing, and distributing power for the terminal 800.

The multimedia component 808 includes a screen providing an output interface between the terminal 800 and a user. In some embodiments, the screen can include a liquid crystal display (LCD) and a touch panel (TP). In case the screen includes a touch panel, the screen can be implemented as a touch screen to receive input signals from the user. The touch panel includes one or more touch sensors to sense touches, swipes, and gestures on the touch panel. The touch sensors can sense a boundary of a touch or swipe action, and detect a duration and pressure associated with the touch or swipe operation. In some embodiments, the multimedia component 808 includes a front-facing camera and/or a rear-facing camera. The front camera and/or the rear camera may receive external multimedia data when the device 800 is in an operating mode, such as a shooting mode or a video mode. Each front camera and rear camera can be a fixed optical lens system or have a focal length and optical zoom capability.

The audio component 810 is configured to output and/or input audio signals. For example, the audio component 810 includes a microphone (MIC) that is configured to receive external audio signals when the terminal 800 is in an operational mode, such as a call mode, a recording mode, and a voice recognition mode. The received audio signals can be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module can be a keypad, click wheel, buttons, etc. These buttons can include, but are not limited to: a home button, a volume button, a start button, and a lock button.

The sensor assembly 814 includes one or more sensors for providing various aspects of status assessment for the terminal 800. For example, the sensor assembly 814 may detect an open/closed state of the device 800, the relative positioning of components, such as the components being the display and keypad of the terminal 800, the sensor assembly 814 may also detect a change in the position of the terminal 800 or one of the components of the terminal 800, the presence or absence of user contact with the terminal 800, the orientation of the terminal 800 or acceleration/deceleration of the terminal 800, and the terminal 800's temperature change. The sensor assembly 814 can include a proximity sensor configured to detect the presence of a nearby object in the absence of any physical contact. The sensor assembly 814 can also include an optical sensor, such as a CMOS or CCD image sensor, for use in imaging applications. In some embodiments, the sensor assembly 814 can also include an acceleration sensor, a gyroscope sensor, a magnetic sensor, a pressure sensor, or a temperature sensor.

The communication component 816 is configured to facilitate communication between the terminal 800 and other devices by wired or wireless means. The terminal 800 can access a wireless network based on a communication standard, such as Wi-Fi, 2G or 3G, or a combination thereof. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, in the NFC module can be implemented based on Radio Frequency Identification (RFID) technology, Infrared Data Association (IrDA) technology, Ultra Wide Band (UWB) technology, Bluetooth (BT) technology, and other technologies.

In exemplary embodiments, the terminal 800 can be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 804 including instructions, the instructions being executable by a processor 820 of the terminal 800 for accomplishing the above-described method. For example, the non-transitory computer-readable storage medium can be ROM, random access memory (RAM), CD-ROM, magnetic tape, floppy disks, and optical data storage devices, etc.

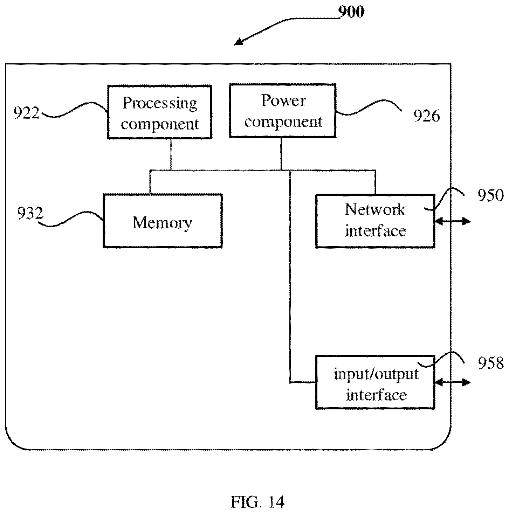

Referring to FIG. 14, an embodiment of the present disclosure shows a structure of a base station. For example, the base station 900 can be provided as a network side device. Referring to FIG. 14, the base station 900 includes a processing component 922, which further includes one or more processors, and a memory resource represented by a memory 932 for storing instructions that can be executed by the processing component 922, such as an application program. The application program stored in memory 932 can include one or more modules each corresponding to a set of instructions. Alternatively, the processing component 922 is configured to execute the instructions to perform any of the methods applied to said base station as described in the foregoing method.

The base station 900 may also include a power component 926 configured to perform power management of the base station 900, a wired or wireless network interface 950 configured to connect the base station 900 to a network, and an input/output (I/O) interface 958. The base station 900 can operate an operating system based on the operating system stored in the memory 932, such as Windows Server TM, Mac OS XTM, UnixTM, LinuxTM, FreeBSDTM, or the like.

Other implementations of the embodiments of the disclosure will be readily apparent to those skilled in the art from consideration of the specification and practice of the disclosure disclosed herein. This application is intended to cover any modification, use or adaptation of the embodiments of the present disclosure, these modifications, uses or adaptations follow the general principles of the embodiments of the present disclosure and include those in the technical field not disclosed by the embodiments of the present disclosure Common knowledge or common technical means. The specification and examples are to be considered exemplary only, with a true scope and spirit of the embodiments of the disclosure being indicated by the following claims.

It should be understood that the embodiments of the present disclosure are not limited to the precise structures described above and shown in the drawings, and various modifications and changes can be made without departing from the scope thereof. The scope of embodiments of the present disclosure is limited only by the appended claims.

## Claims

1. A method for monitoring Tracking Reference Signal (TRS) availability indication information, performed by a terminal, comprising:
determining that the terminal is configured to monitor Paging Early Indication Downlink Control Information (PEI DCI); and
monitoring Tracking Reference Signal (TRS) availability indication information in a predetermined manner, wherein the predetermined manner comprises at least one of:
a first manner of monitoring the TRS availability indication information in the PEI DCI;
a second manner of monitoring the TRS availability indication information in paging DCI.

2. The method of claim 1, wherein the terminal monitors the TRS availability indication information in the first manner or the second manner; the method further comprising:
determining that the terminal is configured to monitor the TRS availability indication information;
monitoring the TRS availability indication information in the first manner.

3. The method of claim 1 or 2, further comprising:
determining that the terminal monitors the TRS availability indication information in the first manner; and
determining a valid duration of the TRS availability indication information.

4. The method according to claim 3, wherein the valid duration comprises:
a duration configured by a base station;
or,
a duration determined according to a predetermined protocol.

5. The method of claim 3, wherein the valid duration is an integer multiple of a default paging cycle.

6. The method of claim 1, wherein the terminal monitors the TRS availability indication information in the first manner and the second manner; wherein
valid duration information configured based on the first manner and valid duration information configured based on the second manner are configured as separate duration information;
or,
valid duration information configured based on the first manner and valid duration information configured based on the second manner are collectively configured as same duration information;
or,
valid duration information of the TRS availability indication information monitored in the first manner is determined based on valid duration information configured based on the second manner;
or,
valid duration information of the TRS availability indication information monitored in the second manner is determined based on valid duration information configured based on the first manner;
wherein the valid duration information indicates a valid duration of the TRS availability indication information.

7. The method of claim 1, further comprising:
determining that an information field of a predetermined TRS resource set group indicated by first TRS availability indication information received is a first predetermined value; and
determining that the predetermined TRS resource set group is valid.

8. The method of claim 7, further comprising:
determining that the information field indicated by second TRS availability indication information received within a valid duration indicated by first TRS availability indication information is the first predetermined value; wherein the information field is an information field corresponding to the predetermined TRS resource set group; and
extending the valid duration.

9. The method of claim 7, further comprising:
determining that an information field indicated by second TRS availability indication information received within a valid duration indicated by first TRS availability indication information is a second predetermined value; wherein the information field is an information field corresponding to the predetermined TRS resource set group; and
ignoring indication of the information field.

10. The method of claim 7, further comprising:
determining that an information field indicated by second TRS availability indication information received after a valid duration indicated by first TRS availability indication information is a second predetermined value; wherein the information field is an information field corresponding to the predetermined TRS resource set group;
determining that the predetermined TRS resource set group indicated by the information field is invalid.

11. A method for monitoring TRS availability indication information, performed by a base station, comprising:
determining that a terminal is configured to monitor PEI DCI; and
transmitting TRS availability indication information in a predetermined manner, wherein the predetermined manner comprises at least one of:
a first manner of transmitting the TRS availability indication information in the PEI DCI;
a second manner of transmitting the TRS availability indication information in paging DCI.

12. An apparatus for monitoring TRS availability indication information, comprising:
a determining module, configured to determine that a terminal is configured to monitor PEI DCI;
a monitoring module, configured to monitor TRS availability indication information in a predetermined manner, wherein the predetermined manner comprises at least one of:
a first manner of monitoring the TRS availability indication information in the PEI DCI;
a second manner of monitoring the TRS availability indication information in paging DCI.

13. An apparatus for monitoring TRS availability indication information, comprising:
a determining module, configured to determine that a terminal is configured to monitor PEI DCI;
a transmission module, configured to transmit TRS availability indication information in a predetermined manner, wherein the predetermined manner comprises at least one of:
a first manner of monitoring the TRS availability indication information in the PEI DCI;
a second manner of monitoring the TRS availability indication information in paging DCI.

14. A communication device, comprising:
a memory; and
a processor, connected to the memory, configured to execute computer-executable instructions stored in the memory, and capable of implementing the method of any one of claims 1 to 10 or 11.

15. A computer storage medium, storing computer-executable instructions which, when executed by a processor, enable the method of any one of claims 1 to 10 or 11 to be implemented.
